Europäisches Patentamt

**European Patent Office**

Office européen des brevets

(19)

(11)    **EP 0 891 538 B1**

(12)                 **EUROPÄISCHE PATENTSCHRIFT**

(45) Veröffentlichungstag und Bekanntmachung des
Hinweises auf die Patenterteilung:
**04.06.2003  Patentblatt 2003/23**

(51) Int Cl.⁷: **G01M 3/22**

(86) Internationale Anmeldenummer:
**PCT/EP97/01517**

(21) Anmeldenummer: **97915433.3**

(22) Anmeldetag: **25.03.1997**

(87) Internationale Veröffentlichungsnummer:
**WO 97/037205 (09.10.1997 Gazette 1997/43)**

(54) **EINRICHTUNG UND VERFAHREN ZUR LECKAGEERKENNUNG**

LEAK DETECTION DEVICE AND PROCESS

DISPOSITIF ET PROCEDE DE DETECTION DE FUITES

(84) Benannte Vertragsstaaten:
**BE CH DE ES FI FR GB LI NL**
Benannte Erstreckungsstaaten:
**SI**

(30) Priorität: **01.04.1996  DE 19612947**

(43) Veröffentlichungstag der Anmeldung:
**20.01.1999  Patentblatt 1999/03**

(73) Patentinhaber: **Framatome ANP GmbH**
**91050 Erlangen (DE)**

(72) Erfinder:
• **JAX, Peter**
**D-91056 Erlangen (DE)**

• **LOMPE, Heinrich**
**D-65187 Wiesbaden (DE)**

(74) Vertreter: **Mörtel & Höfner**
**Patentanwälte**
**Blumenstrasse 1**
**90402 Nürnberg (DE)**

(56) Entgegenhaltungen:
**EP-A- 0 692 706          DE-A- 2 431 907**
**US-A- 5 301 538**

• **PATENT ABSTRACTS OF JAPAN vol. 009, no.
020 (P-330), 26.Januar 1985 & JP 59 166886 A
(ISHIKAWAJIMA HARIMA JUKOGYO KK),
20.September 1984,**

**Beschreibung**

Die Erfindung betrifft eine Einrichtung zur Lekkageerkennung und Leckageortung in einer kerntechnischen Anlage, insbesondere an einer Rohrleitung in einer kerntechnischen Anlage, mit einer Sammelleitung, die für einen zu detektierenden Stoff permeabel ist und die mit einer Pumpe und mit einem Sensor für den Stoff verbunden ist, wobei der Sensor nicht zur Erfassung der Radioaktivität des Stoffes geeignet ist.

Die Erfindung betrifft auch ein Verfahren zur Leckageerkennung und Leckageortung in einer kerntechnischen Anlage, insbesondere an einer Rohrleitung in einer kerntechnischen Anlage, bei dem die Konzentration eines Stoffes, der von der Anlage in eine Sammelleitung eingedrungen ist, gemessen wird.

Aus der DE A 24 31 907 ist eine Einrichtung zur Leckageerkennung und Leckageortung (LEOS) bekannt. Diese Einrichtung beinhaltet eine Sammelleitung, die für zu detektierende Stoffe durchlässig ist. Mit der Sammelleitung ist eine Pumpe verbunden, mit der nacheinander Volumina eines Transportmediums, das z.B. Luft ist, durch die Sammelleitung hindurch befördert werden. Am Ende der Sammelleitung ist mindestens ein Sensor angeordnet, der in die Sammelleitung eingedrungene Stoffe erkennt.

Aus der EP 0 175 219 B1 ist ein spezieller Aufbau einer solchen Sammelleitung bekannt. Diese weist beabstandete durchlässige Stellen auf, die aus Sintermetall bestehen können. Zwischen diesen durchlässigen Stellen ist die Leitung undurchlässig.

In der US-Patentschrift US 5,301,538 ist eine weitere Einrichtung zur Leckageerkennung und Leckageortung beschrieben, die wenigstens zwei für zu detektierende Stoffe durchlässige Sammelleitungen aufweist. Die Sammelleitungen münden in einem gemeinsamen Gassensor, der insbesondere ein Sensor für radioaktive Strahlung sein kann. Es können insbesondere auch zwei Gassensoren vorhanden sein.

Aus der JP A 59 166 886 ist eine Einrichtung zur Überwachung einer Leitung bekannt, in der radioaktive Stoffe geführt werden. Diese Leitung ist von einer Sammelleitung größeren Durchmessers umgeben, die mit einem Radioaktivitätsdetektor verbunden ist.

Der Erfindung liegt die Aufgabe zugrunde, die bekannten Einrichtungen zur Leckageerkennung und Leckageortung so auszubauen, daß ein zweiter diversitärer Lecknachweis möglich ist. Dadurch sollen eine noch zuverlässigere Leckageerkennung und Leckageortung gewährleistet sein. Es soll auch ein diesbezügliches Verfahren angegeben werden.

Die Aufgabe, eine geeignete Einrichtung anzugeben, wird gemäß der Erfindung dadurch gelöst, daß die Sammelleitung mit einem Detektor zur Erfassung der Radioaktivität des Stoffes verbunden ist.

Dieser Detektor kann ein Gammadetektor sein. Es wird dann nicht nur das Konzentrationsmaximum eines eingedrungenen Stoffes, sondern auch das Aktivitätsmaximum des eingedrungenen Stoffes bestimmt und zur Leckageerkennung und Leckageortung herangezogen. Damit ergeben sich zwei redundante Einrichtungen zur Leckageortung.

Vorteilhafte Ausgestaltungen der Einrichtung nach der Erfindung sind in den Unteransprüchen genannt.

Nach einer besonderen Ausgestaltung zweigt in Strömungsrichtung vor dem Sensor eine Zweigleitung ab, die mit dem Detektor verbunden ist.

Beispielsweise sind in der Sammelleitung in Abständen Öffnungen angeordnet, an denen Rückschlagventile angeordnet sind. Diese Rückschlagventile sind so ausgelegt, daß sie bei Unterschreiten eines vorgegebenen Druckes öffnen und sonst geschlossen sind.

Wenn man die Sensorleitung an ihrem Eingang durch ein Ventil verschließt und eine Saugpumpe einschaltet, die dem Detektor für Radioaktivität vorgeschaltet ist, öffnen diese Rückschlagventile nach dem Unterschreiten des vorgegebenen Druckes. AUS der Zeitspanne, die zwischen dem Öffnen der Rückschlagventile und dem Ansprechen des Detektors zur Erfassung der Radioaktivität vergeht, kann dann bei bekannter Strömungsgeschwindigkeit in der Sammelleitung der Leckageort bestimmt werden.

Man erhält vorteilhafterweise zwei Möglichkeiten zur Leckageortung, so daß zuverlässige Ergebnisse gewährleistet sind.

Die Aufgabe, ein geeignetes Verfahren zur Leckageerkennung und Leckageortung in einer kerntechnischen Anlage anzugeben, wird gemäß der Erfindung dadurch gelöst, daß die Radioaktivität des Stoffes gemessen wird.

Der Leckageort wird beispielsweise, bei bekannter Strömungsgeschwindigkeit in der Sammelleitung aus der Zeitspanne, die zwischen einem Druckstoß in der Sammelleitung und dem Ansprechen des Detektors zur Erfassung von Radioaktivität vergangen ist, ermittelt. Der Druckstoß kann insbesondere durch das Öffnen mindestens eines Rückschlagventils hervorgerufen sein.

Ausführungsbeispiele der Einrichtung und des Verfahrens zur Leckageerkennung und Leckageortung nach der Erfindung werden anhand der Zeichnung näher erläutert:

FIG 1     zeigt eine Variante der Einrichtung ohne Rückschlagventile.

FIG 2     zeigt eine Variante mit Rückschlagventilen.

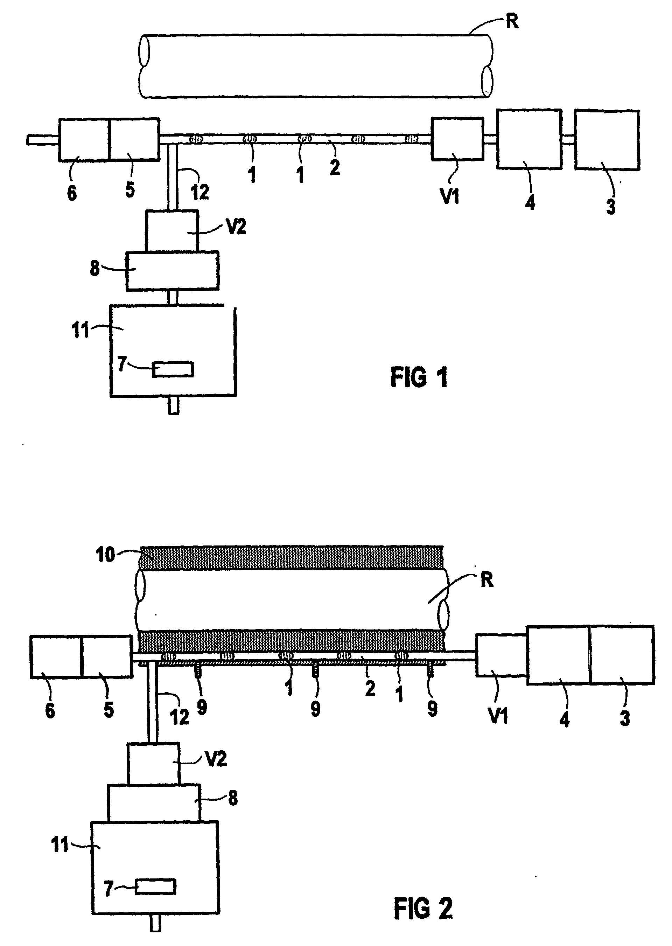

Figur 1 zeigt eine z.B. radioaktives Primärwasser führende Rohrleitung R eines Kernkraftwerkes, an der entlang eine Sammelleitung 2 einer Einrichtung zur Leckageerkennung und Leckageortung (LEOS) verlegt ist. Die gezeigte Sammelleitung 2 enthält poröse Sintermetallstellen 1, die für ein Gas durchlässig sind, und besteht im übrigen aus gasundurchlässigem Metall. Die porösen Sintermetallstellen 1 sind z.B. in Abständen von 0,5 m in der Sammelleitung 2 integriert.

Die Einrichtung zur Leckageerkennung- und Leckageortung, die als solche bekannt ist, umfaßt eine am Eingang der Sammelleitung 2 angeordnete Pumpe 3 zum Einspeisen eines Transportgases und am Ausgang der Sammelleitung 2 einen Sensor 5 für den zu detektierenden Stoff, der in die Sammelleitung 2 eingedrungen sein könnte. Dieser Stoff kann z.B. auch Feuchte (Wasser) sein, wenn der Sensor ein Feuchtemesser ist.

In Strömungsrichtung vor dem Sensor 5 zweigt eine Zweigleitung 12 ab, die mit dem Detektor 7 zur Erfassung von Radioaktivität verbunden ist.

Dieser Detektor 7 ist z.B. ein Gammadetektor. Zur Erzeugung eines größeren Unterdrucks in der Sammelleitung 2 kann in die Zweigleitung 12 eine Saugpumpe 8 integriert sein, der ein Ventil V2 vorgeschaltet sein kann. Ein anderes Ventil V1 kann in Strömungsrichtung hinter der Pumpe 3 zum Verschließen der Sammelleitung an ihrem Anfang angeordnet sein.

Am Anfang der Sammelleitung 2 kann ein Kalibriermodul 4 angeordnet sein, mit dem ein Testgas in definierter Weise in die Sammelleitung 2 zum Kalibrieren des Sensors 5 und des Detektors 7 eingespeist werden kann. Mit der Sammelleitung 2 kann auch ein Reglermodul 6 zum Einstellen der Strömungsgeschwindigkeit in der Sammelleitung 2 verbunden sein.

Der Detektor 7 zur Erfassung von Radioaktivität ist in einem Vorratsbehälter 11 angeordnet, der z.B. ein Volumen zwischen einem Liter und zehn Litern hat. Die Zweigleitung 12 mündet in diesen Vorratsbehälter 11 ein. Vom Vorratsbehälter 11 geht eine Ableitung aus, die ein nicht gezeigtes Überdruckventil enthalten kann und eventuell über eine Rückleitung zum Containment eines Kernkraftwerkes führt.

Figur 2 zeigt eine Variante der Einrichtung zur Leckageerkennung und Leckageortung nach Figur 1, die alle Bestandteile der Variante nach Figur 1 enthält und zusätzlich Rückschlagventile 9 aufweist, die in äquidistanten Abständen, z.B. alle 2 Meter, in die Sammelleitung 2 integriert sind. Diese Rückschlagventile 9 öffnen bei Unterschreitung eines Mindestdrucks und sorgen dann über kontrollierte Ansaugstellen, z.B. über kreisrunde Öffnungen mit 1 mm$^2$ Querschnitt, für eine ausreichende Verbindung zwischen der Sammelleitung 2 und dem Raumbereich unterhalb der Sammelleitung 2. Die Variante nach Figur 2 hat auch eine thermische Isolierung 10, die die Rohrleitung R und die Sammelleitung 2 umschließt, wobei die Rückschlagventile 9 aus der Isolierung 10 herausragen.

Das bekannte Verfahren zur Leckageerkennung und Ortung wird nach der Erfindung vorteilhafterweise folgendermaßen ergänzt:

Die Sammelleitung 2 wird an ihrem Anfang in Strömungsrichtung gesehen mit dem Ventil V1 abgeschlossen. Dann wird die Saugpumpe 8 gestartet. Die mit der Saugpumpe 8 angesaugte Luft wird über den Vorratsbehälter 11 geführt, in dem die Aktivitätsmessung mit dem Detektor 7 vorgenommen wird. Falls im Falle einer Leckage aus der Rohrleitung R eine radioaktive Flüssigkeit, z.B. Primärwasser, austritt, steigt der Dampfgehalt im Raum unterhalb der Rohrleitung R, insbesondere unterhalb der Isolierung 10, und damit in der angesaugten Luft stark an. Die Aktivität beträgt z.B. aufgrund der N16-Reaktion im Reaktorkern 5,2*10$^{12}$ Zerfälle pro sec (Bq). Berücksichtigt man eine Transportzeit von 30 sec zum Detektor 7 und eine Meßzeit von 10 sec, so sinkt die Aktivität gemäß der Halbwertszeit des Isotops ab (z.B. auf 1*10$^{11}$ Bq für N16), ist aber noch voll ausreichend für eine Detektion der Leckage, vorausgesetzt, daß eine ausreichende Menge Wasserdampf in der Meßluft mit angesaugt wird. Bisher übliche Sintermetallstellen 1 in der Sammelleitung 2, die nur für das Vorhandensein des Sensors 5 ausgelegt waren, hatten nur eine geringe Porengröße, z.B. von 0,5 µ. Eine Optimierung der Porengröße, z.B. auf 1 µ macht eine Erfassung von Radioaktivität mit dem Detektor 7 möglich, ohne daß dadurch das übliche Erfassen von Stoff oder Feuchte im Sensor 5 beeintraächitgt wird. Allerdings muß dann für die Messung mit dem Sensor 5 gegebenenfalls die Strömungsgeschwindigkeit in der Sammelleitung 2 reduziert werden, um einen zu starken Unterdruck und damit einen zu starken kontinuierlichen Ansaugstrom zu vermeiden, der die Leckageortung beeinträchtigen könnte.

Probleme mit zu geringen Ansaugöffnungen in der Sammelleitung 2 können durch die Verwendung der genannten Rückschlagventile 9 vermieden werden.

Solange z.B. die Leckageortung mittels eines Feuchtesensors 5 mit einem geringen Unterdruck in der Sammelleitung 2 gegenüber der Umgebung arbeitet, werden die Rückschlagventile 9 nicht geschaltet. Das bedeutet, daß die Messung und Ortung, die aufgrund der mit den Sensor 5 gemessenen Werte erfolgt, nicht gestört ist.

Wenn die Saugpumpe 8 aktiviert und das Ventil V1 geschlossen wird, dann sinkt der Unterdruck in der Sammelleitung 2 schnell unter die Ansprechschwelle der Rückschlagventile 9 ab. Diese öffnen dann und gewährleisten einen hinreichend hohen Luftstrom zum Detektor 7, so daß eine Aktivitätsmessung möglich ist. Da die Leckage örtlich begrenzt ist, wird dabei immer ein Summenstrom von allen Ventilen 9 als Luft/Dampfmischung zum Detektor 7 geführt. Der Luftstrom wird dabei in den ausreichend dimensionierten Vorratsbehälter 11 geführt.

Dort wird die Aktivität des gesamten Volumens vom Detektor 7 integral erfaßt.

Vom Zeitpunkt des Öffnens der Rückschlagventile 9, der an einem Druckstoß in der Sammelleitung 2 erkennbar ist, bis zum Zeitpunkt, an dem der aktivierte Dampf den Detektor 7 erreicht, verstreicht eine definierte Transportzeit T. Zum Erkennen des Druckstoßes kann ein geeigneter Sensor vorhanden sein. Die Transportzeit T ist im wesentlichen von der Entfernung x zwischen dem dem Leckageort benachbarten Ort an der Sammelleitung 2 einerseits und dem Detektor 7 andererseits abhängig. Bei entsprechender Kalibrierung kann aus der zeit T die Entfernung x bestimmt werden. Dies ist in einfacher Weise bei einem angenähert konstanten Massenstrom entlang der Sammelleitung 2 der Fall, gilt aber auch bei einem nicht konstanten, linearen, Zusammenhang T (x).

Nach erfolgreicher Detektion und Ortung kann der Meßvorgang periodisch wiederholt werden, wenn vorher die Sammelleitung 2 mit Hilfe der Pumpe 3 gespült wurde.

Im Falle, daß Rückschlagventile 9 mit dahinterliegenden Öffnungen in der Sammelleitung 2 integriert sind, kann es von Vorteil sein, die Größe der Öffnungen entlang der Sammelleitung 2 so zu variieren, daß ein gleichbleibender Massenstrom pro Zeiteinheit einströmt. Das ist bei gleichem Öffnungsquerschnitt nicht automatisch gegeben, da nahe der Saugpumpe 8 ein höherer Unterdruck vorliegt als an dem am weitesten entfernten Rückschlagventil 9. Dies bedeutet, daß die nahe der Saugpumpe 8 gelegenen Ansaugstellen eine kleinere Öffnung haben sollten und die Öffnung mit steigendem Abstand allmählich größer gewählt sein sollten.

Im Falle, daß keine Rückschlagventile 9 eingesetzt werden, kann gegebenenfalls die Transportgeschwindigkeit des in die Sammelleitung 2 eingedrungenen Dampfes durch kurzzeitiges Öffnen des Ventils V1 in der Sammelleitung 2 beschleunigt werden, um die erforderliche Transportzeit zu erreichen. Hieraus leitet sich insgesamt die folgende Vorgehensweise ab: Nach dem Schließen des Ventils V1 in der Sammelleitung 2 und dem Öffnen des Ventils V2 in der Zweigleitung 12 wird die Saugpumpe 8 gestartet und der Unterdruck in der Sammelleitung 2 kontrolliert, bis ein gewünschter Endwert erreicht ist. Dann wird das Ventil V1 in der Sammelleitung 2 kurzzeitig geöffnet, bis eine ausreichende Menge Substanz, insbesondere Dampf, in möglichst kurzer Transportzeit im Vorratsbehälter 11 angekommen ist. Dort wird mit dem Detektor 7 die Aktivität kontinuierlich als Funktion der Zeit gemessen, z.B. durch Erfassung der pro Zeiteinheit auf summierten Zahl der Impulse.

Mit dem geschilderten Verfahren kann eine ausreichende Menge Substanz, z.B. Wasserdampf, für einen Leckagenachweis angesaugt werden. Wenn z.B. insgesamt 40 sec verstreichen zwischen der Erzeugung des N16-Isotops und dessen Eintreffen am Detektor 7, dann liegt dort noch eine Aktivität von $1*10^{11}$ Bq pro $m^3$ Primärwasser vor. Dies bedeutet bei einer Ausbeute des Detektors 7 von 0,1 (jeder 10-te Zerfall wird detektiert) und einer Meßzeit von 10 sec (30 bis 40 sec nach Erzeugung des Isotops), daß

$$1*10^{-9}\ m^3 = 1\ mg\ Primärwasser$$

zu einer Anzeige von 100 Impulsen führt. Dies wäre eine ausreichend hohe Anzeige.

Bei einem Unterdruck von 0,8 bar in der Sammelleitung 2 erzielt man einen Volumenstrom von 1,4 $cm^3$/sec bei einer mittleren Geschwindigkeit von 5 cm/sec und einem Innendurchmesser der Sammelleitung 2 von 0,3 cm, wenn 9 Sintermetallstellen 1 vorhanden sind. Falls bei einem Leckagefall zwei Sintermetallstellen 1 beteiligt sind, die im Abstand von 0,5 m angeordnet sind, ergibt sich ein Volumenstrom von 0,3 $cm^3$/sec und damit bei einer Meßzeit von 10 sec ein Meßvolumen von 3 $cm^3$. Nimmt man an, daß im Leckagefall, wenn z.B. 100 kg/h auftreten, der N16 enthaltende Primärkreisdampf unterhalb der Isolierung 10 eine Sättigungskonzentration von 50 % erreicht, enthält 1 $cm^3$ Luft in der Sammelleitung 2 angenähert 0,5 mg Wasserdampf. Im obengenannten Meßvolumen sind also mehr als 1 mg Wasserdampf enthalten, wobei ein Nachweis möglich ist.

wird die Porengröße der Sintermetallstellen 1 von 0, 5µ auf 1µ erhöht, so wird der Volumenstrom um den Faktor. 3 erhöht. Dies ist im allgemeinen ausreichend, um auch noch kleinere Dampfkonzentrationen nachzuweisen.

**Patentansprüche**

1. Einrichtung zur Leckageerkennung und Leckageortung in einer kerntechnischen Anlage, insbesondere an einer Rohrleitung (R) in einer kerntechnischen Anlage, mit einer Sammelleitung (2), die für einen zu detektierenden Stoff permeabel ist und die mit einer Pumpe (3) und mit einem Sensor (5) für den Stoff verbunden ist, wobei der Sensor nicht zur Erfassung der Radioaktivität des Stoffes geeignet ist, **dadurch gekennzeichnet, daß** die Sammelleitung (2) mit einem Detektor (7) zur Erfassung der Radioaktivität des Stoffes verbunden ist.

2. Einrichtung nach Anspruch 1, **dadurch gekennzeichnet, daß** in Strömungsrichtung vor dem Sensor (5) eine Zweigleitung (12) abzweigt, die mit dem Detektor (7) verbunden ist.

3. Einrichtung nach Anspruch 1 oder 2, **dadurch gekennzeichnet, daß** dem Detektor (7) eine Saugpumpe (8) zugeordnet ist.

4. Einrichtung nach einem der Ansprüche 1 bis 3, **dadurch gekennzeichnet, daß** der Detektor (7) in einem Vorratsbehälter (11) angeordnet ist.

5. Einrichtung nach einem der Ansprüche 1 bis 4, **dadurch gekennzeichnet, daß** in Strömungsrichtung vor der Sammelleitung (2) ein Ventil (V1) angeordnet ist.

**6.** Einrichtung nach einem der Ansprüche 1 bis 5, **dadurch gekennzeichnet, daß** in der Sammelleitung (2) in Abständen Öffnungen angeordnet sind, an denen Rückschlagventile (9), die bei Unterschreiten eines vorgegebenen Druckes öffnen, angeordnet sind.

**7.** Einrichtung nach einem der Ansprüche 1 bis 6, **dadurch gekennzeichnet, daß** der Sensor (5) ein Sensor zur Konzentrationsbestimmung des Stoffe ist.

**8.** Verfahren zur Leckageerkennung und Leckageortung in einer kerntechnischen Anlage, insbesondere an einer Rohrleitung (R) in einer kerntechnischen Anlage, bei dem die Konzentration eines Stoffes, der von der Anlage in eine Sammelleitung (2) eingedrungen ist, gemessen wird,
**dadurch gekennzeichnet, daß** die Radioaktivität des Stoffes gemessen wird.

**9.** Verfahren nach Anspruch 8,
**dadurch gekennzeichnet, daß** aus der Zeitspanne zwischen einem Druckstoß in der Sammelleitung (2) und dem Ansprechen eines Detektors (5, 7) zur Erfassung von Radioaktivität bei bekannter Strömungsgeschwindigkeit in der Sammelleitung (2) der Leckageort bestimmt wird.

**10.** Verfahren nach Anspruch 9,
**dadurch gekennzeichnet, daß** der Druckstoß in der Sammelleitung (2) durch das Öffnen mindestens eines Rückschlagventils (9) hervorgerufen ist.

**Claims**

**1.** Device for leak detection and leak location in a nuclear power plant, in particular at a pipeline (R) in a nuclear power plant, having a header (2) which is permeable to a substance which is to be detected and is connected to a pump (3) and to a sensor (5) for the substance, the sensor being unsuitable for recording the radio activity of the substance, **characterized in that** the header (2) is connected to a detector (7) for recording the radioactivity of the substance.

**2.** Device according to Claim 1, **characterized in that** a branch line (12) which is connected to the detector (7), branches off upstream of the sensor (5), as seen in the direction of flow.

**3.** Device according to Claim 1 or 2, **characterized in that** the detector (7) is assigned a suction pump (8).

**4.** Device according to one of Claims 1 to 3, **charac-**

**terized in that** the detector (7) is arranged in a reservoir (11).

**5.** Device according to one of Claims 1 to 4, **characterized in that** a valve (V1) is arranged upstream of the header (2), as seen in the direction of flow.

**6.** Device according to one of Claims 1 to 5, **characterized in that** openings, at which nonreturn valves (9) which open when the pressure falls below a predetermined pressure are arranged, are arranged at intervals in the header (2).

**7.** Device according to one of Claims 1 to 6, **characterized in that** the sensor (5) is a sensor for determining the concentration of the substance.

**8.** Method for leak detection and leak location in a nuclear power plant, in particular at a pipeline (R) in a nuclear power plant, in which the concentration of a substance which has penetrated from the plant into a header (2) is measured, **characterized in that** radioactivity of the substance is measured.

**9.** Method according to Claim 8, **characterized in that** the location of the leak is determined from the time between a pressure surge in the header (2) and the response of a detector (5, 7) for recording radioactivity, with a known flow velocity in the header (2).

**10.** Method according to Claim 9, **characterized in that** the pressure surge in the header (2) is caused by at least one nonreturn valve (9) being opened.

**Revendications**

**1.** Dispositif de détection de fuites et de localisation de fuites dans une installation de génie nucléaire, notamment sur un conduit (R) d'une installation de génie nucléaire, comprenant un conduit (2) collecteur qui est perméable à une substance à détecter et qui communique avec une pompe (3) et avec un capteur (5) pour la substance, le capteur n'étant pas apte à détecter la radioactivité de la substance, **caractérisé en ce que** le conduit (2) collecteur communique avec un détecteur (7) de détection de la radioactivité de la substance.

**2.** Dispositif suivant la revendication 1, **caractérisé en ce qu'**en amont, dans la direction du courant du capteur (5) bifurque un conduit (12) de dérivation qui communique avec le détecteur (7).

**3.** Dispositif suivant la revendication 1 ou 2, **caractérisé en ce qu'**il est associé au détecteur (7) une pompe (8) aspirante.

4. Dispositif suivant l'une des revendications 1 à 3, **caractérisé en ce que** le détecteur (7) est disposé dans un réservoir (11).

5. Dispositif suivant l'une des revendications 1 à 4, **caractérisé en ce qu'**en amont, dans la direction du courant du conduit (2) collecteur est montée une vanne (V1).

6. Dispositif suivant l'une des revendications 1 à 5, **caractérisé en ce qu'**il est prévu dans le conduit (2) collecteur à certains intervalles des ouvertures, sur lesquelles sont montés des clapets (9) anti-retour qui s'ouvrent lors du passage de la pression à une valeur inférieure à une pression donnée à l'avance.

7. Dispositif suivant l'une des revendications 1 à 6, **caractérisé en ce que** le capteur (5) est un capteur de détermination de la concentration de la substance.

8. Procédé de détection de fuites et de localisation de fuites dans une installation du génie nucléaire, notamment sur un conduit (R) d'une installation de génie nucléaire, dans lequel on mesure la concentration d'une substance qui est refoulée de l'installation dans un conduit (2) collecteur, **caractérisé en ce que** l'on mesure la radioactivité de la substance.

9. Procédé suivant la revendication 8, **caractérisé en ce que** l'on détermine, à patir du laps de temps entre un coup de bélier dans le conduit (2) collecteur et la réponse d'un détecteur (5, 7) de détection de la radioactivité, pour une vitesse connue du courant dans le conduit (2) collecteur, le lieu de la fuite.

10. Procédé suivant la revendication 9, **caractérisé en ce que** l'on provoque le coup de bélier dans le conduit (2) collecteur par l'ouverture d'au moins un clapet (9) anti-retour.

FIG 1

FIG 2